# EUROPEAN PATENT APPLICATION

(11) **EP 4 629 070 A1**
(43) Date of publication of application: **08.10.2025**
(21) Application number: 24747460.4
(22) Date of filing: 25.01.2024
(51) Int. Cl.: G06F 9/451, G06F 9/30, G06F 40/279, G06F 3/0482

(54) **ELECTRONIC DEVICE FOR PROVIDING SERVICE BASED ON SEARCH TERMS, OPERATION METHOD THEREOF, AND STORAGE MEDIUM**

(30) Priority: 26.01.2023 KR 20230009822; 17.02.2023 KR 20230021382
(71) Applicant: Samsung Electronics Co., Ltd., Suwon-si, Gyeonggi-do 16677 (KR)
(72) Inventor: KIM, Gawon, Suwon-si Gyeonggi-do 16677 (KR); LEE, Bona, Suwon-si Gyeonggi-do 16677 (KR); LIM, Yeunwook, Suwon-si Gyeonggi-do 16677 (KR); NAM, Myoungwoo, Suwon-si Gyeonggi-do 16677 (KR)
(74) Representative: Nederlandsch Octrooibureau
(86) International application number: PCT/KR2024/001195
(87) International publication number: WO 2024/158226

(57) **Abstract**

According to an embodiment, an electronic device (101) may comprise displays (160, 360), one or more processors (120, 360), and memories (130, 330) for storing instructions. According to an embodiment, the instructions may be set so that, when executed by the one or more processors, the electronic device displays, on at least a portion of the display, a search window set to receive a text input. According to an embodiment, the instructions may be set so that, when executed by the one or more processors, the electronic device receives a text input via the search window. According to an embodiment, the instructions may be set so that, when executed by the one or more processors, the electronic device identifies whether the text includes a character string representing a function and/or instruction of the electronic device. According to an embodiment, the instructions may be set so that, when executed by the one or more processors, the electronic device displays a user interface, including a selectable object for changing the settings for a function of the electronic device corresponding to the character string, on at least a portion of the display in response to the identification of the character string.

## Description

### [Technical Field]

An embodiment of the disclosure relates to an electronic device for providing a search word-based service, an operation method thereof, and storage medium.

### [Background Art]

More and more services and additional functions are being provided through user terminals, e.g., smartphones, or other electronic devices. To meet the needs of various users and increase utility value of electronic devices, communication service carriers or device manufacturers are jumping into competitions to develop electronic devices with various features. Services provided through electronic devices are provided through applications installed on the electronic devices, and accordingly, the types of applications that may be run on electronic devices are also diversifying.

As services provided by electronic devices become increasingly complex, users may need to perform manipulation multiple times to receive the intended service. Therefore, a need exists for a user interface that allows users to easily search for and use the service they intend on an electronic device without the need for performing manipulation multiple times. Further, users may want to receive a user interface capable of conveniently and intuitively controlling the intended service.

### [Detailed Description of the Invention]

### [Technical Solution]

According to an embodiment, an electronic device 101 may comprise a display 160 or 360, and at least one processor 120, 360, and memory 130, 330 storing instructions. According to an embodiment, the instructions may be configured to, when executed by the at least one processor, cause the electronic device to display a search window configured to receive text input to at least a portion of the display. According to an embodiment, the instructions may be configured to, when executed by the at least one processor, cause the electronic device to receive text input through the search window. According to an embodiment, the instructions may be configured to, when executed by the at least one processor, cause the electronic device to identify whether the text includes at least one string representing a function and/or a command of the electronic device. According to an embodiment, the instructions may be configured to, when executed by the at least one processor, cause the electronic device to display, on at least a portion of the display, a user interface including a selectable object for changing a setting for a function of the electronic device corresponding to the at least one string in response to identifying the at least one string.

According to an embodiment, a method for providing a search word-based service by an electronic device may comprise displaying a search window configured to receive text input to at least a portion of a display of the electronic device. According to an embodiment, the method may comprise receiving text input through the search window. According to an embodiment, the method may comprise identifying whether the text includes at least one string representing a function and/or a command of the electronic device. According to an embodiment, the method may comprise displaying, on at least a portion of the display, a user interface including a selectable object for changing a setting for a function of the electronic device corresponding to the at least one string in response to identifying the at least one string.

According to an embodiment, in a non-volatile storage medium storing at least one computer-readable instruction, the at least one instruction configured to, when executed by at least one processor 120, 320 of an electronic device 101, cause the electronic device 101 to perform at least one operation, the at least one operation may comprise displaying a search window configured to receive text input to at least a portion of a display of the electronic device. According to an embodiment, the at least one operation may comprise receiving text input through the search window. According to an embodiment, the at least one operation may comprise identifying whether the text includes at least one string representing a function and/or a command of the electronic device. According to an embodiment, the at least one operation may comprise displaying, on at least a portion of the display, a user interface including a selectable object for changing a setting for a function of the electronic device corresponding to the at least one string in response to identifying the at least one string.

### [Brief Description of Drawings]

FIG. 1 is a block diagram illustrating an electronic device in a network environment according to an embodiment;
FIG. 2 is a view illustrating a home screen including a pre-search search window according to an embodiment;
FIG. 3 is a block diagram illustrating an internal configuration of an electronic device according to an embodiment;
FIG. 4 is a flowchart illustrating operations of an electronic device for providing a search word-based service according to an embodiment;
FIG. 5A is a view illustrating a user interface of a first scheme related to a change in configuration for a function of an electronic device according to an embodiment;
FIG. 5B is a view illustrating a user interface of a second scheme related to a change in configuration for a function of an electronic device according to an embodiment;
FIG. 5C is a view illustrating a user interface of a third scheme related to a change in configuration for a function of an electronic device according to an embodiment;
FIG. 5D is a view illustrating a user interface of a fourth scheme related to a change in configuration for a function of an electronic device according to an embodiment;
FIG. 6 is a view illustrating an example of comparison between a screen before a search and a screen after a search word is input, according to an embodiment;
FIG. 7 is a view illustrating a scheme of changing a plurality of types of configurations according to an embodiment;
FIG. 8 is a view illustrating an example of a user interface of a turn-on/turn-off scheme according to an embodiment;
FIG. 9 is a view illustrating an example of a user interface of a mode configuration scheme according to an embodiment;
FIG. 10 is a view illustrating a user interface including a command-applied selectable object according to an embodiment;
FIG. 11A is a view illustrating an example of a user interface including a selectable object for changing a configuration for a function of an electronic device according to an embodiment;
FIG. 11B is a view illustrating an example of a user interface in which a configuration value for a function of an electronic device is changed in response to a command according to an embodiment;
FIG. 12A is a view illustrating an example of a user interface including an operation button related to a configuration for a function of an electronic device according to an embodiment;
FIG. 12B is a view illustrating an example of a user interface including a command-applied selectable object and an operation button related to a configuration for a function of an electronic device according to an embodiment;
FIG. 13 is a view illustrating an example of a user interface including a selectable object related to a function of an electronic device indicating music according to an embodiment;
FIG. 14 is a view illustrating an example of a user interface including a selectable object for executing an application related to a search word according to an embodiment;
FIG. 15A is a view illustrating an example of a user interface in the middle of inputting a portion of a search word according to an embodiment; and
FIG. 15B is a view illustrating an example of a user interface after a whole search word is input according to an embodiment.

In connection with the description of the drawings, the same or similar reference numerals may be used to denote the same or similar elements.

### [Mode for Carrying out the Invention]

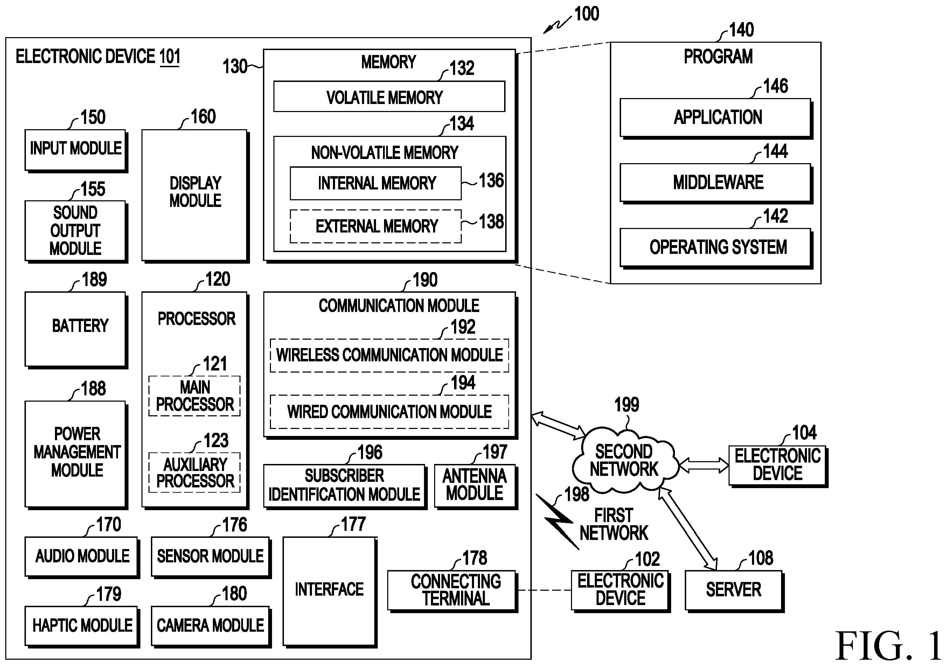

FIG. 1 is a block diagram illustrating an electronic device 101 in a network environment 100 according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

In the following description, the components easy to understand from the description of the above embodiments are denoted with or without the same reference numerals and their detailed description may be skipped. According to an embodiment of the disclosure, an electronic device 101 may be implemented by selectively combining configurations of different embodiments, and the configuration of one embodiment may be replaced by the configuration of another embodiment. However, it is noted that the present invention is not limited to a specific drawing or embodiment.

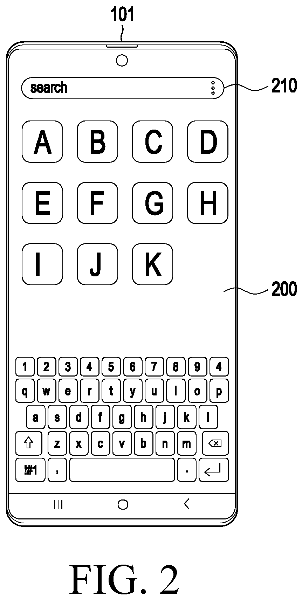

FIG. 2 is a view illustrating a home screen including a pre-search search window according to an embodiment.

Referring to FIG. 2, a message 'search' is displayed on the search window 210 disposed on at least a portion of the display of the electronic device 101, indicating that the user may search for the intended service by inputting a search word. Here, the service intended by the user may include access to a menu desired to be found in the electronic device 101 and execution of a function using a search word.

According to an embodiment, the user interface (e.g., home screen, app screen) 200 for a plurality of applications may include a search window 210. However, this is an example, and any screen capable of displaying objects, such as icons, items, files, images, or contents, other than the home screen or the app screen may be configured to include the search window. For example, the search window may be referred to as a finder.

In an embodiment, the search word input by the user through the search window 210 is text, and may include a string representing a function and/or command of the electronic device. For example, if the user inputs the text 'turn on Wi-fi' through the search window 210, a shortcut-enabled user interface for changing the Wi-Fi configuration may be displayed. When the Wi-Fi function is turned off, the user interface including an object indicating that the Wi-Fi function is turned on in response to an input of the text may be displayed.

As described above, according to an embodiment, the user may be provided with the user interface that may conveniently and intuitively control the intended service, providing convenience to the user because there is no need to go through several steps to find and execute the detailed menu in executing the desired function. Hereinafter, a screen showing the result of access to the menu and execution of a function to be found in the electronic device 101 in response to text input through the search window 210 is described in detail below.

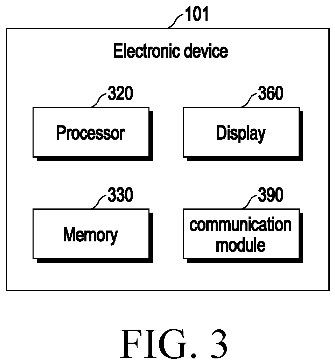

FIG. 3 is a block diagram illustrating an internal configuration of an electronic device according to an embodiment. The electronic device 101 of FIG. 3 may be the electronic device 101 of FIG. 1. Further, the electronic device 101 of FIG. 3 may have the same configuration as the electronic device 101 of FIG. 1.

Referring to FIG. 3, an electronic device 101 may include at least one processor 320, memory 330, a display 360, and/or a communication module 390.

According to an embodiment, the memory 330 may be electrically connected to the processor 320 and store at least one application. The memory 330 may store a control program for controlling the electronic device 101, a UI related to applications provided by the manufacturer or downloaded from the outside and images for providing the UI, user information, documents, databases, or related data.

According to an embodiment, the memory 330 may store instructions that, when executed, control the processor 320 to perform various operations. According to an embodiment, the memory 330 may be operatively connected to the display 360 and the processor 320 and may store instructions configured to display a search window configured to receive text input to at least a portion of the display, receive text input through the search window, identify whether the text includes at least one string representing a function and/or a command of the electronic device, and display, on at least a portion of the display, a user interface including a selectable object for changing a setting for a function of the electronic device corresponding to the at least one string in response to identifying the at least one string. Here, the instructions may be included in software (e.g., the program 140) and may be stored in a storage medium (e.g., the internal memory 136 or external memory 138) readable by a machine (e.g., the electronic device 101). The instructions may include a code generated by a complier or a code executable by an interpreter.

Further, the command may mean a user input that directly or indirectly instructing the operation of the electronic device.

In an embodiment, the text input through the search window may be a keyword for the user to access a desired menu or to directly execute a task through an application. The input text may include a string representing at least one of a function name indicating a function of an electronic device designating a desired service and a command instructing execution of the service. The input text may be constituted of a search sentence containing a command (or predicate), or may be in the form of a short phrase, such as a search word or keyword. In an embodiment, the text input through the search window may be performed by various methods such as an input interface displayed on the display by calling an input interface (e.g., keyboard (or keypad)) of the electronic device 101, an external keyboard device connected via Bluetooth, a keyboard application, or a voice recognition function (e.g., voice assistant) of receiving the user's voice through the microphone of the electronic device 101, but the method for inputting text to the search window is not limited thereto.

For example, if the user inputs a search sentence including a command, the user may configure or change the desired function directly, and provide a user interface capable of access to a desired function and user configuration without a screen switch on the screen where the search window is displayed.

The processor 320 may identify an input of text including a command through the search window. According to an embodiment, based on identifying text input including a command, the processor 320 may identify whether the command is related to a change in configuration for a function of the electronic device. Here, the string in the text is at least one designated string, and may represent a function in the electronic device 101. The at least one string may include a noun referring to a service that may be provided by the electronic device 101, such as a function, task, application, and operation in the electronic device 101. For example, the processor 320 may recognize a word or phrase having a specific meaning, such as a function name and an operation name of the electronic device 101, as an entity based on named entity recognition (NES). Therefore, the string representing (or for identifying) the function of the electronic device may also be referred to as an entity, and the term may not be limited thereto. The configuration for the function of the electronic device may include at least one of turn-on, turn-off, or attribute change for the function of the electronic device 101. The attribute change may include, e.g., at least one of a change to a specific mode, an attribute value, a level configuration, or a level change.

For example, if the user inputs the text 'turn on Wi-Fi' through the search window, the processor 320 may identify a string representing the function, Wi-Fi, of the electronic device and a string representing the command 'turn on' in the input text. Accordingly, the processor 320 may change the configuration of the function, e.g., Wi-Fi function, of the electronic device 101 to turn on, and display a user interface where the changes are displayed. When the Wi-Fi function is turned off, the processor 320 may display a user interface including an object indicating that the Wi-Fi function is turned on in response to an input of the text 'turn on Wi-Fi'. Here, the object may be manipulated by the user, and through user selection on the object, the user may accept the application of turn-on of the Wi-Fi function or change the configuration of the Wi-Fi function to the turn-off.

As such, the command may include at least one of a turn-on command, a turn-off command, an attribute setting command, or a change command, and the user may use the command to change configurations for detailed functions in the electronic device 101. Accordingly, the processor 320 may automatically change configurations for detailed functions in the electronic device 101 in response to the command, and display the changed result. Further, to receive approval from the user for the change in the configuration, the changed result may be displayed, and the input for the user's approval may be received through the user interface that displays the changed result. Accordingly, the processor 320 may apply a configuration corresponding to the changed result. As described above, the processor 320 may control the operation of automatically changing and displaying the configuration for the corresponding function when the command is related to the change of configuration for the function in the electronic device 101 and a configuration change according to the command is possible.

According to an embodiment, based on identifying a text input including a command, the processor 320 may identify whether the command is related to execution of a function (or application) in the electronic device 101. Accordingly, the processor 320 may display a user interface related to execution of a function corresponding to the command among functions in the electronic device 101. The user interface may include the user-selectable object capable of directly executing the function. The user interface related to the execution of the function corresponding to the command may be a window corresponding to a shortcut of the function.

For example, the user interface may be output in the form of a quick panel, pop-up window, or floating on the entire screen, and an example of the output method is a picture in picture (PIP). The user interface is an execution screen of the function, and for example, the function may be executed in a picture in picture (PIP) manner without executing an application. Accordingly, in a state where an execution screen capable of manipulating an object (e.g., a specific button) displayed on the user interface is displayed, the user may view the execution screen on which the function corresponding to the input string is currently being executed by manipulating the specific button displayed on the execution screen. For example, the object displayed on the user interface is selectable by the user, and may have the purpose of selecting one of the two states, e.g., on/off, like a toggle key.

According to an embodiment, the display 360 may not only simultaneously support input/output functions of data, but may also detect a touch. The display 360 may be referred to as a touch screen. When implemented in the form of a touchscreen, the display 360 may display various pieces of information generated according to the user's touch. The display 360 may be the display module 160 described above in connection with FIG. 1.

According to an embodiment, the communication module 390 may form a communication channel with at least one server and support data transmission and reception for using content. For example, the communication module 390 may receive content related to the application from the server when connecting to the server.

According to an embodiment, in order to provide a search word-based service, the processor 320 may recognize text including a string input through the search window. For example, a recognition model trained for text recognition may be used, and the recognition model may recognize the text input to execute the function of the electronic device 101. Further, the processor 320 may designate functions and/or commands of the electronic device in relation to access to a specific menu and execution of functions, and store them in a database in advance. For example, it is possible to increase the efficiency of the use of the electronic device 101 by providing a search window to the user to input keywords for accessing a specific menu and executing a function. Further, a quick panel may be displayed so that users may access a desired service on the current screen only by inputting a search word through the search window, so that the user may easily change the configuration for the desired function, as does a hot key.

According to an embodiment, the processor 320 may identify the function of the electronic device 101 by performing named entity recognition on at least a portion of text input through the search window. Further, the processor 320 may identify what kind of command it is by performing command recognition on the input text.

For example, if the user inputs an object that precedes a predicate, such as 'Wi-Fi', without using a command (or predicate) such as 'turn-on' to use the search word function, a quick panel for the function corresponding to the object may be displayed. The quick panel may include items that may be configured by the user in relation to Wi-Fi. On the other hand, if only a command such as 'turn-on' is input without inputting an object such as 'Wi-Fi', the processor 320 may search for at least one function of the electronic device having a configuration opposite to the command 'turn-on', such as the configuration 'turn-off, in response to identifying the command. The processor 320 may control to display the user interface including a selectable object for changing the configuration for the at least one searched function on at least a portion of the display 360.

According to an embodiment, the processor 320 may search for not only a function having the configuration 'turn-off among functions in the electronic device 101 but also a function having the configuration 'turn-off among external devices connected (or interworkable) to the electronic device 101. For example, the user may control various IoT devices (e.g., home appliances to which IoT technology is applied) that construct the home network using the electronic device 101, so that he or she may search for a function with the configuration 'turn-off as described above among the IoT devices. Further, the processor 320 may search for functions in other electronic devices associated with the user account of electronic device 101 in addition to IoT devices. The processor 320 may search for a function having the configuration 'turn-off as described above not only in the electronic device 101 but also in at least one external device logged in with the same user account.

As such, since the processor 320 may interwork with a peripheral external device, not only the configuration of the function in the electronic device 101 but also the configuration of the function in the external devices that may interwork with the electronic device 101 may be changed in response to the text input through the search window.

Meanwhile, when the user inputs both an object such as 'turn-on Wi-Fi' and a command to use the search word function, the processor 320 may identify a string representing both the function and the command of the electronic device in the input text. Based on identifying that the string represents the function and command of the electronic device, the processor 320 may control to display a user interface including a selectable object to which the command is applied on at least a portion of the display in relation to the configuration for the function of the electronic device. Accordingly, the processor 320 may display a quick panel on which an object set as "turn-on" for Wi-Fi is displayed on at least a portion of the display 360. The object set as "turn-on" may be manipulated by the user, and the processor 320 may apply the turn-on configuration of the Wi-Fi in response to a user selection of the object. For example, the processor 320 may receive an approval through a user touch input to the quick panel in a state where the Wi-Fi function is displayed as 'turn-on'. On the other hand, the object displayed as the 'turn-on' may be changed and displayed as a selectable object where the application of the command is released in response to the user selection. As such, the object displayed as 'turn-on' on the quick panel may be changed in configuration to 'turn-off by the user manipulation.

Although a toggle scheme such as an on/off switch has been described as an example in the description, at least one attribute of a mode, an attribute value, or a level associated with a function may be changed through a search word input. The processor 320 may display a user interface including a selectable object indicating the changed attribute on at least a portion of the display 360. Through the user manipulation on the object, the user may change the mode or adjust the attribute value or level.

Meanwhile, an example in which, in state in which the user inputs both an object and a command, such as 'turn on Wi-Fi' to use the search word function, the string corresponding to the object corresponds to a function in the electronic device 101 has been described but, in some cases, the corresponding string may not indicate a function in the electronic device 101. In this case, the processor 320 needs to determine which service the string represents. To that end, the processor 320 may provide what the user intends through prior learning. For example, the processor 320 may identify whether the input text is a short-text command without a predicate. Here, the short sentence may include a case where there is no command (or predicate) or the number of words or characters in the input text is less than or equal to a predetermined value. The predicate-less command may be a text without a command or a request word.

For example, the predicate-less text such as "iced Americano" may be a text without a command or a request word, but the service intended by the user may be the execution of the service to order "iced Americano". In this case, the processor 320 may identify what the predicate-less text intends using data learned in advance to recognize the short text command.

The processor 320 may, based on the string included in the input text indicating the function of the electronic device, identify the application associated with the function of the electronic device and control to display, on at least a portion of the display 360, a user interface including a selectable object for executing the application associated with the function of the electronic device. For example, when the string included in the input text includes the string 'iced Americano', the processor 320 may identify that the string 'iced Americano' represents the order function of the electronic device. Therefore, the processor 320 may identify a related application for ordering 'iced Americano' associated with the order function, and may display the selectable object (e.g., order button) for executing the application related to 'iced Americano', leading the user to order.

According to an embodiment, the processor 320 may quickly show the result of execution of a function and access to a menu desired to be found in the electronic device 101 on the current screen even without allowing the user to find a desired menu via several actions and manually changing the configuration by allowing the user to input a search word (or search sentence) that is reminded of when accessing the desired menu or executing the function.

According to an embodiment, an electronic device 101 may comprise a display 160 or 360, and at least one processor 120, 360, and memory 130, 330 storing instructions. According to an embodiment, the instructions may be configured to, when executed by the at least one processor, cause the electronic device to display a search window configured to receive text input on at least a portion of the display, receive text input through the search window, identify whether the text includes at least one string representing a function and/or a command of the electronic device, and display, on at least a portion of the display, a user interface including a selectable object for changing a setting for a function of the electronic device corresponding to the at least one string in response to identifying the at least one string.

According to an embodiment, the instructions may be configured to, when executed by the at least one processor, cause the electronic device to, based on the at least one string including a string for identifying the function of the electronic device and a string representing a command for the function, display, on at least a portion of the display, a user interface including the selectable object to which the command is applied in relation to the setting for the function of the electronic device.

According to an embodiment, the command may include at least one of a turn-on command, a turn-off command, an attribute setting command, or a change command.

According to an embodiment, the instructions may be configured to, when executed by the at least one processor, cause the electronic device to change at least one attribute among a mode, an attribute value, or a level associated with the function of the electronic device based on the at least one string including a string for identifying the function of the electronic device and display a user interface including the selectable object indicating the changed attribute on at least a portion of the display.

According to an embodiment, the instructions may be configured to, when executed by the at least one processor, cause the electronic device to based on the at least one string including a string representing a command for the function, search for at least one function of the electronic device having a setting opposite to the command, and display, on at least a portion of the display, a user interface including a selectable object for changing a setting for the searched at least one function of the electronic device.

According to an embodiment, the user interface including the selectable object for changing the setting for the function of the electronic device may include a window capable of a shortcut related to execution of the function of the electronic device.

According to an embodiment, the instructions may be configured to, when executed by the at least one processor, cause the electronic device to receive a user selection of the selectable object in a state in which the user interface including the selectable object for changing the setting for the function of the electronic device is displayed and apply the change in the setting for the function of the electronic device in response to the user selection of the selectable object.

According to an embodiment, the user interface may further include a selectable object for turning on or off an operation of at least one external device interworking with the electronic device together with the selectable object for changing the setting for the function of the electronic device.

According to an embodiment, the instructions may be configured to, when executed by the at least one processor, cause the electronic device to receive a user selection for the selectable object in a state in which the user interface including the selectable object to which the command is applied is displayed and display a user interface including the selectable object where the application of the command is released, in response to the user selection for the selectable object.

According to an embodiment, the instructions may be configured to, when executed by the at least one processor, cause the electronic device to identify an application associated with the function of the electronic device based on the at least one string including a string for identifying the function of the electronic device and display, on at least a portion of the display, a user interface including a selectable object for executing the application associated with the function of the electronic device.

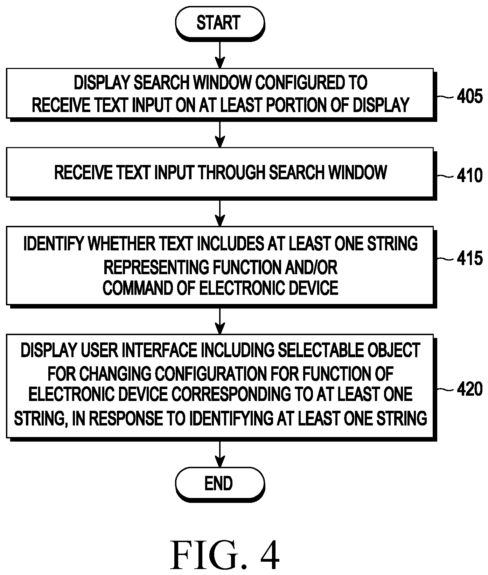

FIG. 4 is a flowchart illustrating operations of an electronic device for providing a search word-based service according to an embodiment. Referring to FIG. 4, the operation method may include operations 405 to 420. Each operation of the operation method of FIG. 4 may be performed by at least one processor (e.g., the processor 120 of FIG. 1 and the processor 320 of FIG. 3) of an electronic device (e.g., the electronic device 101 of FIGS. 1 to 3). In an embodiment, at least one of operations 405 to 420 may be omitted or changed in order or may add other operations.

In operation 405, the electronic device 101 may display a search window configured to receive text input on at least a portion of the display of the electronic device 101.

In operation 410, the electronic device 101 may receive text input through the search window.

In operation 415, the electronic device 101 may identify whether the text includes at least one string representing the function and/or the command of the electronic device.

In operation 420, the electronic device 101 may display, on at least a portion of the display, a user interface including a selectable object for changing a setting for a function of the electronic device corresponding to the at least one string in response to identifying the at least one string.

According to an embodiment, the electronic device 101 may, based on the at least one string including a string for identifying the function of the electronic device and a string representing a command for the function, display, on at least a portion of the display, a user interface including the selectable object to which the command is applied in relation to the setting for the function of the electronic device.

According to an embodiment, the command may include at least one of a turn-on command, a turn-off command, an attribute setting command, or a change command.

According to an embodiment, the electronic device 101 may change at least one attribute among a mode, an attribute value, or a level associated with the function of the electronic device based on the at least one string including a string for identifying the function of the electronic device. The electronic device 101 may display a user interface including the selectable object indicating the changed attribute on at least a portion of the display.

According to an embodiment, the electronic device 101 may, based on the at least one string including a string representing a command for the function, search for at least one function of the electronic device having a setting opposite to the command. The electronic device 101 may display, on at least a portion of the display, a user interface including a selectable object for changing a setting for the searched at least one function of the electronic device.

According to an embodiment, the user interface including the selectable object for changing the setting for the function of the electronic device may include a window capable of a shortcut related to execution of the function of the electronic device.

According to an embodiment, the electronic device 101 may receive a user selection for the selectable object in a state in which the user interface including the selectable object for changing the setting for the function of the electronic device is displayed. The electronic device 101 may apply the change in the setting for the function of the electronic device in response to the user selection for the selectable object.

According to an embodiment, the user interface may further include a selectable object for turning on or off an operation of at least one external device interworking with the electronic device together with the selectable object for changing the setting for the function of the electronic device.

According to an embodiment, the electronic device 101 may receive a user selection for the selectable object in a state in which the user interface including the selectable object to which the command is applied is displayed. The electronic device 101 may display, on at least a portion of the display, a user interface including the selectable object, where the application of the command is released, in response to the user selection for the selectable object.

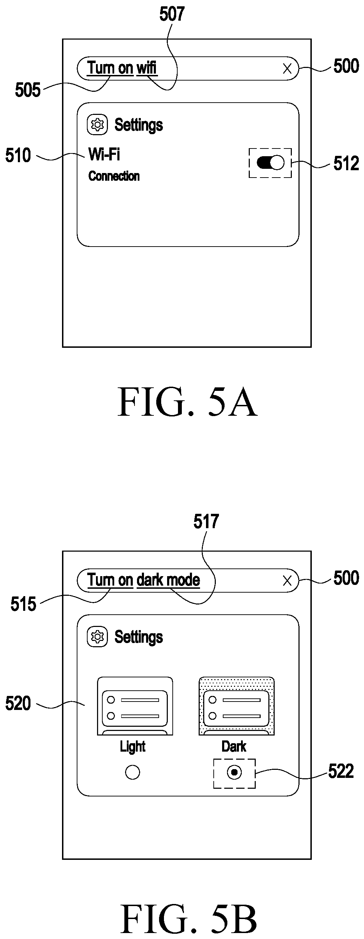

FIG. 5A is a view illustrating a user interface of a first scheme related to a change in setting for a function of an electronic device according to an embodiment. Here, the first scheme may be a toggle scheme, e.g., an on/off switch scheme.

FIG. 5A illustrates an example where the text 'Turn on Wi-Fi' is input into the search window 500. In the text string 'Turn on Wi-Fi', 'Turn on' 505 may correspond to a command, and 'Wi-Fi' 507 may correspond to a function of the electronic device.

As illustrated in FIG. 5A, the electronic device 101 may identify whether the text 'Turn on Wi-Fi' includes a string representing a function and/or a command of the electronic device. The electronic device 101 may display, on the current screen, a user interface 510 including the selectable object 512 for changing the configuration of Wi-Fi corresponding to the function in response to identifying the string representing the command 'Turn on' 505 and/or the function 'Wi-Fi' 507 of the electronic device in at least a portion of the text.

For example, if the user inputs the text 'Turn on Wi-Fi' in the search window 500, a quick panel 510 where the object 512 for turning on (or enabling) or turning off (or disabling) the Wi-Fi function is displayed as on may be displayed. As such, when inputting a text including a string representing both a function and a command of the electronic device, a result of automatically applying the command for the corresponding function may be displayed. The user may accept the application of the turn-on of the Wi-Fi function through selection on the object 512, and change the configuration of the Wi-Fi function to turn-off by manipulating the object 512.

FIG. 5B is a view illustrating a user interface of a second scheme related to a change in configuration for a function of an electronic device according to an embodiment. Here, the second scheme may be a radio button scheme.

FIG. 5B illustrates an example where the text 'Turn on dark mode' is input into the search window 500. 'Turn on' 515 in the text 'Turn on dark mode' may correspond to a string representing a command, and 'dark mode' 517 may correspond to a string representing a function of the electronic device.

The electronic device 101 may display, on the current screen, a user interface 520 including the selectable object 522 for changing the configuration into the dark mode corresponding to the function in response to identifying the string representing the command 'Turn on' 515 and/or the function 'dark mode' 517 of the electronic device in at least a portion of the text. For example, if the user inputs the text 'Turn on dark mode' into the search box 500, an object 522 displayed with dark mode selected may be displayed on the quick panel 520 for changing the configuration of the function.

In an embodiment, a selectable mode (e.g., light mode) may be displayed together with the dark mode, on the quick panel 520, and only one at a time between the options such as dark mode and light mode may be selected and displayed. Meanwhile, although FIG. 5B illustrates the radio button scheme, examples of schemes related to changing the configuration of a function of the electronic device may not be limited thereto. For example, a checkbox scheme is also possible for simultaneously selecting several ones when changing several functions in relation to the configuration of the function.

As shown in FIGS. 5A and 5B, according to an embodiment, a result of automatically reflecting the command for the corresponding function of the electronic device may be displayed in response to the input text through the search window 500. As such, the result reflecting the input content is shown to the user and, in state in which the result is displayed, the user may be given a choice as to whether to apply the result.

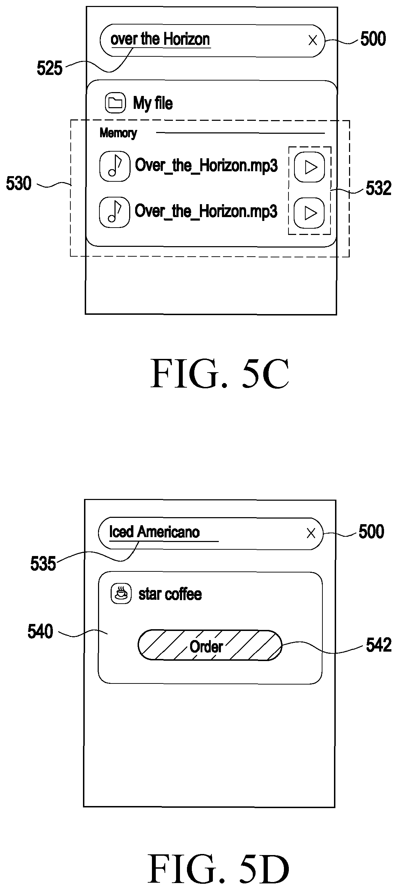

Described below is an example of leading the user to execute when a command for a corresponding command may not immediately be reflected, with reference to FIGS. 5C and 5D.

FIG. 5C is a view illustrating a user interface of a third scheme related to a change in configuration for a function of an electronic device according to an embodiment.

FIG. 5C illustrates an example in which the text 'over the Horizon' is input to the search window 500. FIG. 5C illustrates the user interface 530 displayed by the electronic device 101 when a text of the string 'over the Horizon' 525 is input. The electronic device 101 may search for content in the electronic device 101 matching the string of the text 'over the horizon'. The electronic device 101 may display the user interface 530 where the searched content and an execution button 532 capable of reproducing the content are displayed. As such, even if the user inputs only a music title such as 'over the Horizon' 525, the electronic device 101 may identify that the service desired by the user is the playback of the music 'over the Horizon'.

For example, the electronic device 101 may display an object (e.g., an execution button 532) for playing music on the user interface 530. The electronic device 101 may play music corresponding to 'over the Horizon' on the current screen in response to the user selection on the execution button 532. In an embodiment, the electronic device 101 may identify an application capable of playing music corresponding to 'over the Horizon' on the current screen. In response to the user selection on the execution button 532, the electronic device 101 may play music corresponding to 'over the horizon' by executing the identified application without switching to the execution screen of the identified application.

FIG. 5D is a view illustrating a user interface of a fourth scheme related to a change in configuration for a function of an electronic device according to an embodiment.

In FIG. 5D, a case where the text 'iced Americano' 535 is input into the search window 500 is illustrated. For example, the electronic device 101 may identify the string 'iced Americano' 535 in the text. The electronic device 101 may identify that the string 'iced Americano' indicates an order function of the electronic device. Therefore, the electronic device 101 may identify a related application for ordering 'iced Americano' associated with the order function, and may lead the user to order by enabling and displaying a selectable order button 542 for ordering 'iced Americano' as illustrated in FIG. 5D.

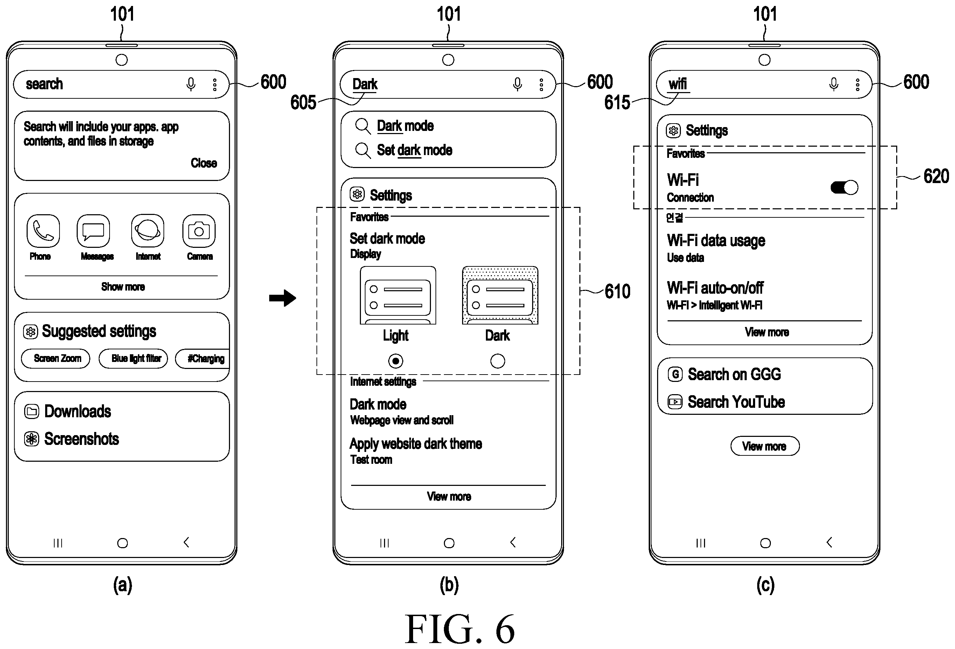

FIG. 6 is a view illustrating an example of comparison between a screen before a search and a screen after a search word is input, according to an embodiment.

FIG. 6(a) illustrates an initial screen on which the search window 600 is provided, and according to an embodiment, the search window 600 may be included in the user interface for a plurality of applications, such as a home screen and an app screen. However, this is an example, and any screen capable of displaying objects, such as icons, items, files, images, or contents, other than the home screen or the app screen may be configured to include the search window.

When a search word (e.g., dark) 605 is input through the search window 600 as illustrated in FIG. 6(b), the electronic device 101 may display a service that may be provided based on the search word (e.g., dark) 605. In FIG. 6(b), a result of searching for configuration menus related to the search word 'dark' 605 is displayed, and a menu 610 for configuring the dark mode is illustrated.

In FIG. 6(c), when a search word (e.g., Wi-Fi) 615 is input through the search window 600, the electronic device 101 may display a service that may be provided based on the search word (e.g., Wi-Fi) 615. In the example of FIG. 6(c), the result of searching for configuration menus related to the search word 'Wi-Fi' 615 is displayed, and at the same time, a menu 620 for Wi-Fi configuration is illustrated.

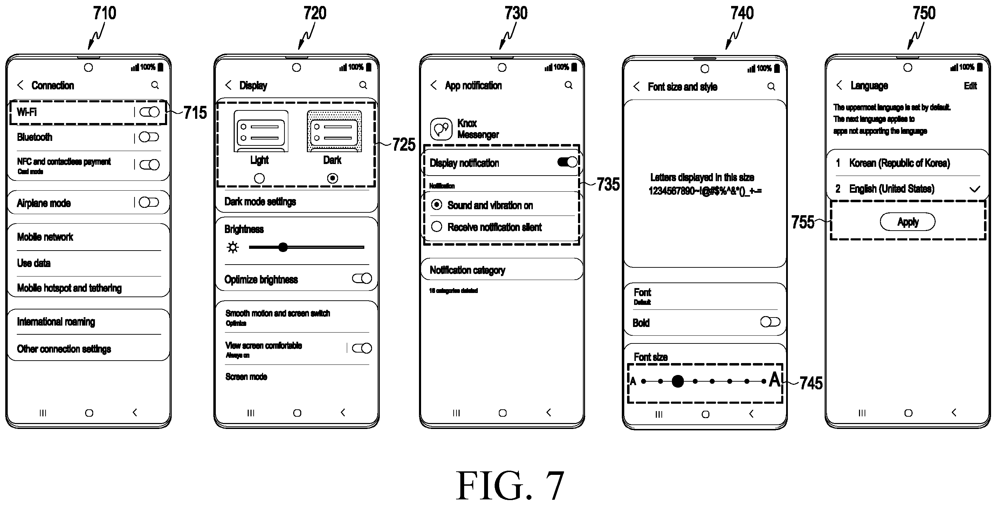

FIG. 7 is a view illustrating a scheme of changing a plurality of types of configurations according to an embodiment.

Referring to FIG. 7, there may be various schemes related to configuration in the electronic device 101. As illustrated in 710, the electronic device 101 may provide a scheme of changing configurations using a toggle scheme, e.g., an on/off switch scheme 715.

As illustrated in 720, the electronic device 101 may provide a scheme of changing configurations using a radio button scheme 725. The radio button scheme may be a scheme where only one of the options is selected and displayed at a time.

As illustrated in 730, the electronic device 101 may provide a scheme of changing configurations using, e.g., a scheme 735 where the on/off switch scheme and the radio button scheme are mixed.

As illustrated in 740, the electronic device 101 may provide a scheme of changing configurations using a slide scheme 745. The slide scheme is a control scheme capable of adjustment to a desired step among several steps, and may correspond to, e.g., a case of adjusting the volume or font size.

As illustrated in 750, the electronic device 101 may provide a scheme of changing the configurations using an action button scheme 755. The action button scheme 755 may be a scheme of leading the user to accept a function intended to change the configuration.

Meanwhile, in FIG. 7, various types of configuration changing schemes are illustrated, but the disclosure may not be limited to those illustrated in 710 to 750 of FIG. 7. For example, when several functions need to be simultaneously changed in relation to the configuration for the function of the electronic device, a checkbox scheme for simultaneously selecting several ones may also be possible and, accordingly, there may be various examples of the schemes related to changing the configuration for the function of the electronic device.

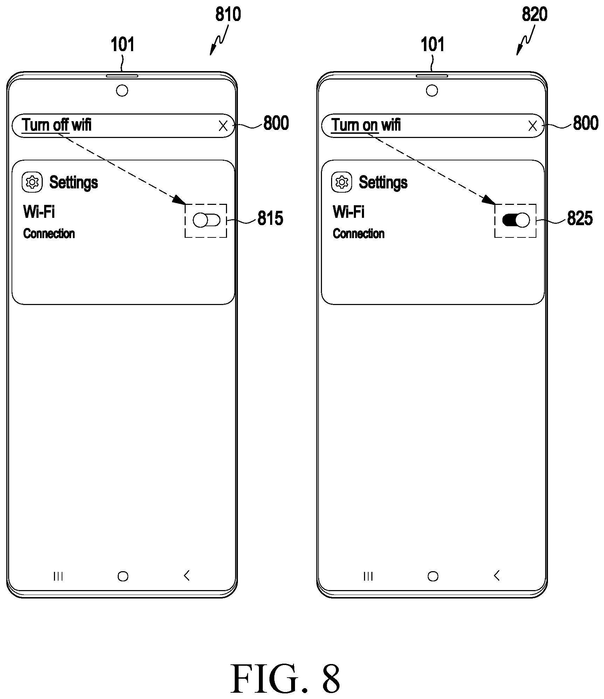

FIG. 8 is a view illustrating an example of a user interface of a turn-on/turn-off scheme according to an embodiment.

810 of FIG. 8 illustrates an example where the text 'Turn off Wi-Fi' is input into the search window 800. When the text 'Turn off Wi-Fi' is input into the search window 800, the electronic device 101 may recognize a command included in the text. The electronic device 101 may provide, through a popup window, a screen showing the result of the operation according to the recognition of the command, e.g., turning off Wi-Fi. The popup window may include an object 815 indicating that the text input through the search window 800 is a Wi-Fi turn-off configuration. The object 815 in the popup window indicates that the command is applied, and the popup window may further include an object requesting user confirmation (e.g., accept or cancel) as to whether to apply the command. Accordingly, when the user is to apply the rule set according to the text input, the electronic device 101 may apply the Wi-Fi turn-off configuration by touching the object requesting the confirmation, touching the popup window indicating that the Wi-Fi is turned off, or closing the popup window.

820 of FIG. 8 illustrates an example where the text 'Turn on Wi-Fi' is input into the search window 800. When the text 'Turn on Wi-Fi' is input into the search window 800, the electronic device 101 may recognize a command included in the text. In response to the command corresponding to 'turn on' in the text string 'turn on Wi-Fi', the electronic device 101 may provide a screen showing an operation according to command recognition, e.g., a result of turning on Wi-Fi through a popup window. The popup window may include an object 825 indicating that the text input through the search window 800 is a Wi-Fi turn-on configuration. When touching again the object 825 to cancel the configured rule, the user may change the turn-on configuration of Wi-Fi into the turn-off configuration in the toggle scheme. Thereafter, when the user is to apply the rule set according to the text input, the electronic device 101 may apply the Wi-Fi turn-on configuration by touching the object requesting the confirmation, touching the popup window indicating that the Wi-Fi is turned on, or closing the popup window.

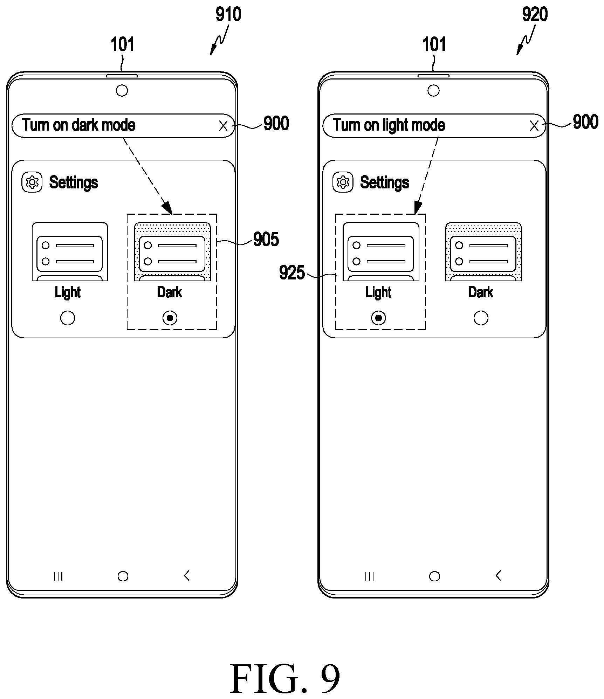

FIG. 9 is a view illustrating an example of a user interface of a mode configuration scheme according to an embodiment.

910 of FIG. 9 illustrates an example where the text 'Turn on dark mode' is input into the search window 900. The electronic device 101 may display, on the current screen, a popup window including the selectable object 905 for changing the configuration into the dark mode corresponding to the function in response to identifying the string representing the command 'Turn on' and/or the function 'dark mode' of the electronic device in at least a portion of the text.

920 of FIG. 9 illustrates an example where the text 'Turn on light mode' is input into the search window 900. For example, if the user inputs the text 'Turn on light mode' into the search box 900, an object 925 displayed with light mode selected may be displayed on the popup window for changing the configuration of the function of the electronic device.

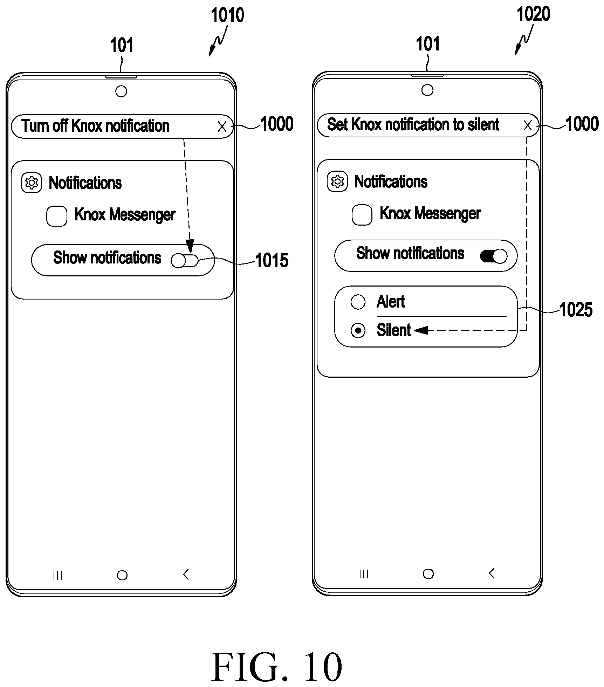

FIG. 10 is a view illustrating a user interface including a command-applied selectable object according to an embodiment.

1010 of FIG. 10 illustrates an example where the text 'Turn off knox notification' is input into the search window 1000. When the text 'Turn off knox notification' is input into the search window 1000, the electronic device 101 may recognize a command included in the text. The electronic device 101 may provide, through a popup window, a screen showing the result of the operation according to the recognition of the command, e.g., turning off the knox notification. The popup window may include an object 1015 indicating that the text input through the search window 1000 is a knox notification turn-off configuration. The object 1015 in the popup window indicates that the command is applied, and it may further include an object requesting user confirmation (e.g., accept or cancel) therefor. Accordingly, when the user is to apply the rule set according to the text input, the electronic device 101 may apply the knox notification turn-off configuration by touching the object requesting the confirmation, touching the popup window indicating that the knox notification is turned off, or closing the popup window.

1020 of FIG. 10 illustrates an example where the text 'Set knox notification to silent' is input into the search window 1000. When the text 'Set knox notification to silent' is input into the search window 1000, the electronic device 101 may recognize a string representing a function and/or a command of the electronic device included in the text. In the text 'Set Knox notification to silent', the string 'knox notification' indicating the function of the electronic device and a string representing a command corresponding to 'Set' may be identified. The electronic device 101 may provide, through a popup window, a screen showing the result of the operation according to the recognition of the command, e.g., providing the result silently with the knox notification on. The popup window may include an object 1025 indicating that the text input has the knox notification on and silent mode configuration. Thereafter, when the user is to apply the rule set according to the text input, the electronic device 101 may apply the knox notification on and silent mode configuration by touching the object requesting the confirmation, touching the popup window indicating that the configuration is the knox notification on and silent mode configuration, or closing the popup window.

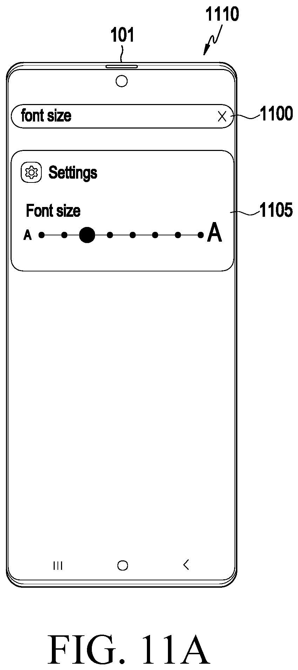

FIG. 11A is a view illustrating an example of a user interface including a selectable object for changing a configuration for a function of an electronic device according to an embodiment.

FIG. 11A illustrates an example where the text 'font size' is input into the search window 1100. When the text 'font size' is input into the search window 1100, the electronic device 101 may recognize a string included in the text. For example, the text such as 'font size' does not include a string representing a command, but the electronic device 101 may recognize the text such as 'font size' as the user's intention to reduce or increase the font size. Accordingly, the electronic device 101 may provide, through a popup window 1105, a screen showing the operation according to the recognition of the command, e.g., the current font size. The user may set to the desired size by manipulating an object capable of adjusting the size displayed on the popup window 1105.

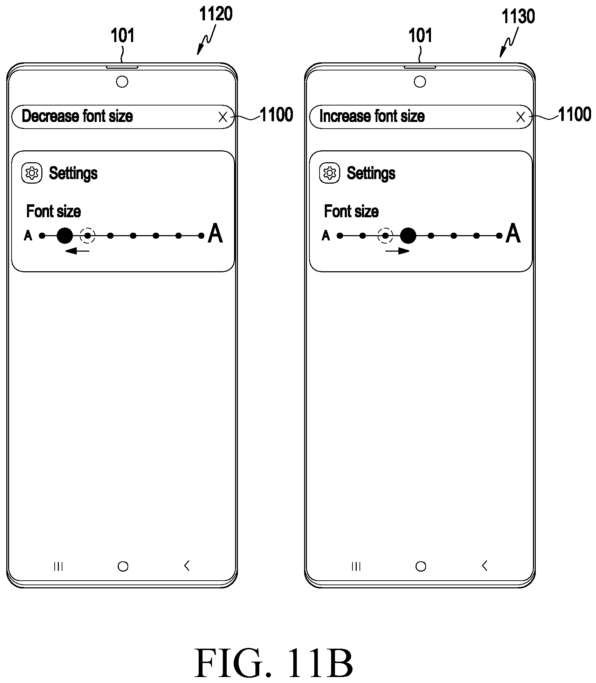

FIG. 11B is a view illustrating an example of a user interface in which a configuration value for a function of an electronic device is changed in response to a command according to an embodiment.

1120 of FIG. 11B illustrates an example where the text 'Decrease font size' is input into the search window 1100. When the text 'Decrease font size' is input into the search window 1100, the electronic device 101 may recognize a string representing a command along with a string representing the function of the electronic device included in the text. Accordingly, the electronic device 101 may provide, through a popup window, a screen showing the operation according to the recognition of the command, e.g., the result of decreasing the current font size. For example, the electronic device 101 may provide a highlight effect to the changed value to indicate that the size has been changed to decrease from the previous font size.

1130 of FIG. 11B illustrates an example where the text 'Increase font size' is input into the search window 1100. When the text 'Increase font size' is input into the search window 1100, the electronic device 101 may recognize a string representing a command along with a string representing the function of the electronic device included in the text. Accordingly, the electronic device 101 may provide, through a popup window, a screen showing the operation according to the recognition of the command, e.g., the result of increasing the current font size.

As described above, when text is input through the search window, the electronic device 101 may provide a popup window for changing at least one attribute among a mode, an attribute value, or a level associated with a function of the electronic device. The electronic device 101 may display a popup window including a selectable object indicating the changed attribute on the current screen without changing the screen. Through the user manipulation on the object displayed on the popup window, the user may change the mode or adjust the attribute value or level.

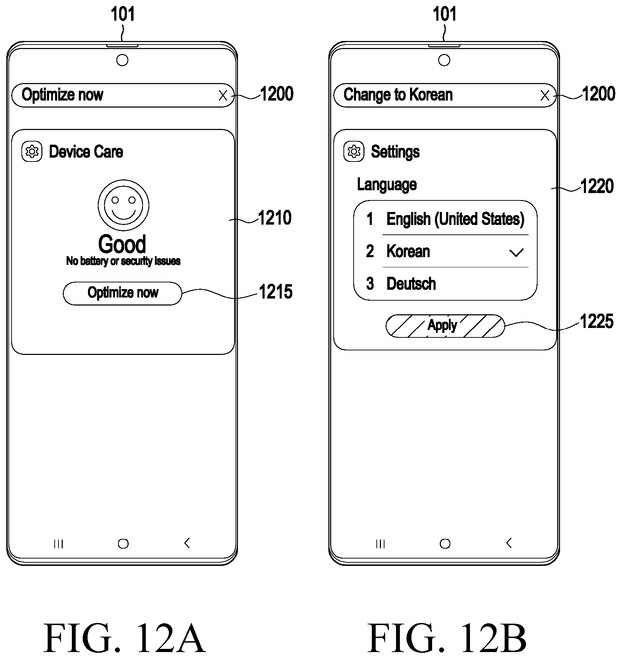

FIG. 12A is a view illustrating an example of a user interface including an operation button related to a configuration for a function of an electronic device according to an embodiment.

FIG. 12A illustrates an example where the text 'Optimize now' is input into the search window 1200. When the text 'Optimize now' is input into the search window 1200, the electronic device 101 may recognize a command included in the text. Accordingly, the electronic device 101 may provide it through a popup window 1210 including a selectable object (e.g., an action button) 1215 for the operation according to command recognition, e.g., optimization. For example, it is possible to lead to the user's selection by providing a highlight effect on object 1215 so that the user may press the object 1215. Accordingly, when the user selects the object 1215, the electronic device 101 may perform an optimization operation.

FIG. 12B is a view illustrating an example of a user interface including a command-applied selectable object and an operation button related to a configuration for a function of an electronic device according to an embodiment.

FIG. 12B illustrates an example where the text 'Change to Korean' is input into the search window 1200. When the text 'Change to Korean' is input into the search window 1200, the electronic device 101 may recognize a string representing a function and/or a command of the electronic device included in the text. In FIG. 12B, the electronic device 101 may provide, through a popup window 1220, a screen showing the operation according to the recognition of the command, e.g., the result of changing the language to Korean. The popup window may include an object 1225 indicating that the language is set to Korean and may be applied. For example, it is possible to lead to the user's selection by providing a highlight effect on object 1225 so that the user may press the object 1225. When the user is to apply the rule set according to the text input, the electronic device 101 may apply the configuration for changing the language to Korean by touching the object requesting the confirmation, touching the object 1225 in the popup window, or closing the popup window.

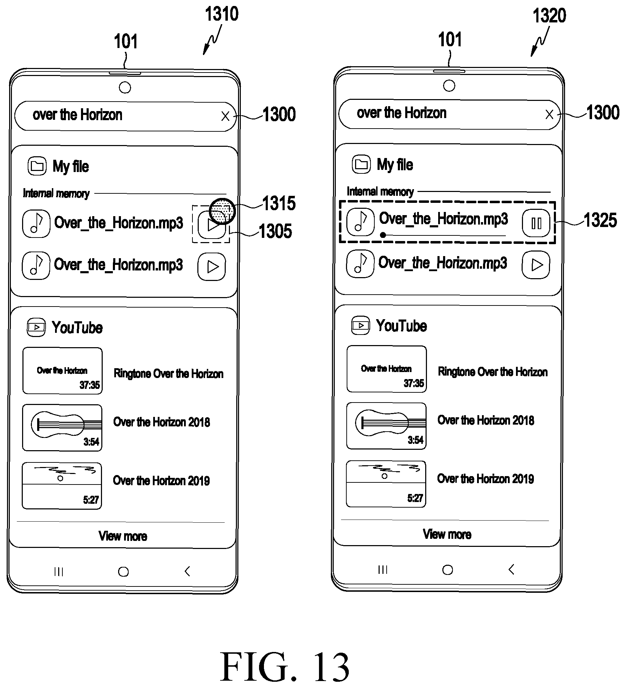

FIG. 13 is a view illustrating an example of a user interface including a selectable object related to a function of an electronic device indicating music according to an embodiment.

1310 of FIG. 13 illustrates an example where the text 'over the Horizon' is input into the search window 1300. The electronic device 101 may search for content in the electronic device 101 matching the text (or search word) 'over the horizon'. The electronic device 101 may display the popup window where the searched content and an execution button 1305 capable of reproducing the content are displayed.

In response to the user input 1315 to the execution button 1305, the electronic device 101 may display an object 1325 indicating that music is currently being played on the screen as illustrated in 1320 of FIG. 13. For example, when playing music, a playback time and an object for playback control may be displayed together through the popup window.

As such, the electronic device 101 may provide an object capable of user control related to music playback corresponding to 'over the Horizon' on the popup window without switching to the execution screen of the music play application.

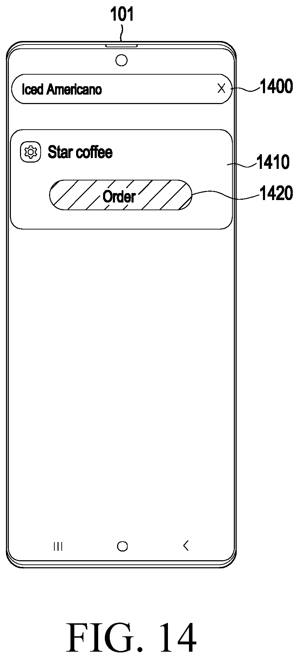

FIG. 14 is a view illustrating an example of a user interface including a selectable object for executing an application related to a search word according to an embodiment.

In FIG. 14, a case where the text 'iced Americano' is input into the search window 1400 is illustrated. The electronic device 101 may search for content in the electronic device 101 matching the text 'iced Americano'. Further, the electronic device 101 may identify the user's intention by identifying the string 'iced Americano' in the input text. The electronic device 101 may identify a related application for ordering 'iced Americano' corresponding to the identified string, and may display a popup window 1410 where a selectable object (e.g., an order button) 1420 for executing the 'iced Americano' related application is displayed. The electronic device 101 may lead to the user's order by displaying the user-selectable order button 1420 for ordering 'iced Americano' using a highlight effect.

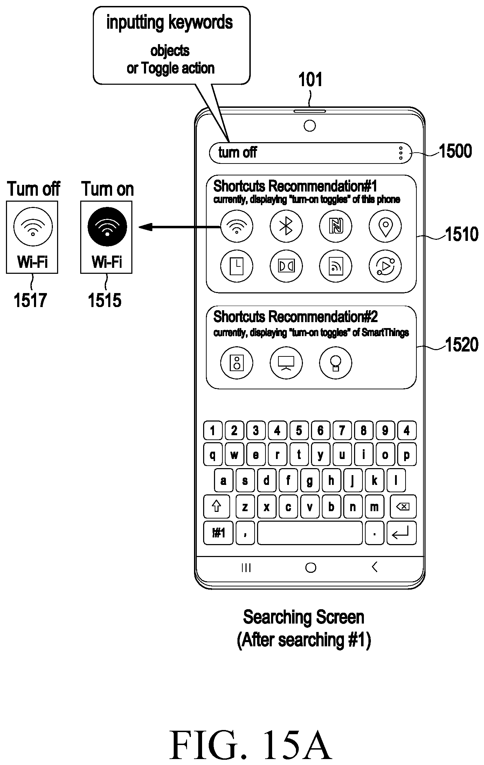

FIG. 15A is a view illustrating an example of a user interface in the middle of inputting a portion of a search word according to an embodiment.

For example, the user may enter text indicating a command into the search window 1500 or text indicating the function of the electronic device. As such, when only text indicating one of the function and the command of the electronic device is input, the electronic device 101 may provide the search result centering on the toggle shortcut capable of 1-depth access (e.g., the quick panel).

FIG. 15A illustrates an example where the text 'turn off is input into the search window 1500. When the text 'turn off is input into the search window 1500, the electronic device 101 may recognize a command included in the text. When only a command such as 'turn off is input without inputting an object corresponding to the function of the electronic device, the electronic device 101 may search for at least one function of the electronic device having a configuration opposite to the command 'turn off, such as the configuration 'turn on', in response to identifying the command.

According to an embodiment, the electronic device 101 may display the first popup window 1510 as the user interface showing a result of searching for at least one function of the electronic device having the 'turn on' configuration in the electronic device 101. A plurality of objects (or icons) included in the first popup window 1510 may have a use such as a shortcut for changing to any one of on/off states by one touch. As in the first popup window 1510, the electronic device 101 may collect and display only functions that may actually apply turn-off in response to a command such as 'turn off'. Alternatively, the electronic device 101 may collect and display functions to which a turn-off command is applied in response to a command such as 'turn off'. For example, when the user touches the object 1515 indicating Wi-Fi with the 'turn on' configuration in the first popup window 1510, it may be changed and displayed as an object 1517 indicating Wi-Fi with the 'turn off configuration. These objects may be selected by the user as used to change the configuration for the function of the electronic device, and the electronic device 101 may indicate that the configuration for the function of the electronic device has been changed by changing and displaying the color of the objects 1515 and 1517. FIG. 15A illustrates an example where the color of the objects 1515 and 1517 is changed according to the user's selection, but the brightness and shape of the objects 1515 and 1517 may be changed according to configurations, and methods thereof may not be limited thereto.

According to an embodiment, the electronic device 101 may search for a function having the 'turn on' configuration for each of external devices connected (or associable) to the electronic device 101, such as IoT devices, and may display a second popup window 1520 showing the search result. The user interface may include a second popup window 1520 displaying a selectable object for turning on or off the operation of at least one external device interworking with the electronic device 101, together with a first popup window 1510 displaying a selectable object for changing the configuration for the function.

For example, on the second popup window 1520, functions that may apply the command of 'turn off, e.g., functions (e.g., speaker, TV, or lighting) having the 'turn on' configuration may be recommended, and displayed using an object. By touching the object for the function (e.g., speaker, TV, or lighting), the user may control the on/off of the device corresponding to the touched object. Here, since the user does not designate which function configuration to turn off, the configuration for the selected function may be changed to turn-off by selecting an object for the desired function among the searched functions.

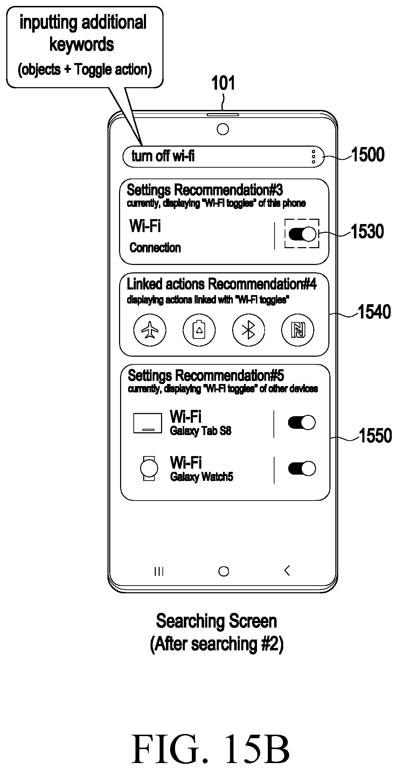

FIG. 15B is a view illustrating an example of a user interface after a whole search word is input according to an embodiment.

FIG. 15B illustrates an example where the text 'turn off Wi-Fi' is input into the search window 1500. When the text 'turn off Wi-Fi' is input into the search window 1500, the electronic device 101 may recognize a string representing a function and/or a command of the electronic device included in the text. If a string representing both a function of 'Wi-Fi' and a command such as 'turn off is identified, the electronic device 101 may display a first popup window including an object 1530 indicating that the Wi-Fi function is turned on based on the string representing the function and command of the electronic device. Further, the electronic device 101 may display a second popup window 1540 including operations linked to the Wi-Fi toggle. Further, the electronic device 101 may display a third popup window 1550 showing the turn-on state of the Wi-Fi function of at least one external device logged in with the same user account as well as the electronic device 101. Here, the object in each popup window may be manipulated by the user, and through user selection on the object, the user may accept the application of turn-on of the Wi-Fi function or change the configuration of the Wi-Fi function to the turn-off.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment, in a non-volatile storage medium storing at least one computer-readable instruction, the at least one instruction configured to, when executed by at least one processor 120, 320 of an electronic device 101, cause the electronic device 101 to perform at least one operation, the at least one operation may comprise displaying a search window configured to receive a text input to at least a portion of a display of the electronic device. According to an embodiment, the at least one operation may comprise receiving a text input through the search window. According to an embodiment, the at least one operation may comprise identifying whether the text includes at least one string representing a function and/or a command of the electronic device. According to an embodiment, the at least one operation may comprise displaying, on at least a portion of the display, a user interface including a selectable object for changing a configuration for a function of the electronic device corresponding to the at least one string in response to identifying the at least one string.

## Claims

1. An electronic device (101) comprising:
a display (160, 360); and
at least one processor (120, 360); and
memory (130, 330) storing instructions that, when executed by the at least one processor, cause the electronic device to:
display a search window configured to receive text input on at least a portion of the display;
receive text input through the search window;
identify whether the text includes at least one string representing a function and/or a command of the electronic device; and
in response to identifying the at least one string, display, on at least a portion of the display, a user interface including a selectable object for changing a setting for a function of the electronic device corresponding to the at least one string .

2. The electronic device of claim 1, wherein the instructions are configured to, when executed by the at least one processor, cause the electronic device to, based on the at least one string including a string for identifying the function of the electronic device and a string representing a command for the function, display, on at least a portion of the display, a user interface including the selectable object to which the command is applied in relation to the setting for the function of the electronic device.

3. The electronic device of claim 1 or 2, wherein the command includes at least one of a turn-on command, a turn-off command, an attribute setting command, or a change command.

4. The electronic device of any one of claims 1 to 3, wherein the instructions are configured to, when executed by the at least one processor, cause the electronic device to:
change at least one attribute among a mode, an attribute value, or a level associated with the function of the electronic device based on the at least one string including a string for identifying the function of the electronic device; and
display a user interface including the selectable object indicating the changed attribute on at least a portion of the display.

5. The electronic device of any one of claims 1 to 4, wherein the instructions are configured to, when executed by the at least one processor, cause the electronic device to:
based on the at least one string including a string representing a command for the function, search for at least one function of the electronic device having a setting opposite to the command; and
display, on at least a portion of the display, a user interface including a selectable object for changing a setting for the searched at least one function of the electronic device.

6. The electronic device of any one of claims 1 to 5, wherein the user interface including the selectable object for changing the setting for the function of the electronic device includes a window capable of a shortcut related to execution of the function of the electronic device.

7. The electronic device of any one of claims 1 to 6, wherein the instructions are configured to, when executed by the at least one processor, cause the electronic device to:
receive a user selection of the selectable object in a state in which the user interface including the selectable object for changing the setting for the function of the electronic device is displayed; and
apply the change in the setting for the function of the electronic device in response to the user selection of the selectable object.

8. The electronic device of any one of claims 1 to 7, wherein the user interface further includes a selectable object for turning on or off an operation of at least one external device interworking with the electronic device together with the selectable object for changing the setting for the function of the electronic device.

9. The electronic device of any one of claims 1 to 8, wherein the instructions are configured to, when executed by the at least one processor, cause the electronic device to:
receive a user selection for the selectable object in a state in which the user interface including the selectable object to which the command is applied is displayed; and
display a user interface including the selectable object where the application of the command is released, in response to the user selection for the selectable object.

10. The electronic device of any one of claims 1 to 9, wherein the instructions are configured to, when executed by the at least one processor, cause the electronic device to:
identify an application associated with the function of the electronic device based on the at least one string including a string for identifying the function of the electronic device; and
display, on at least a portion of the display, a user interface including a selectable object for executing the application associated with the function of the electronic device.

11. A method for providing a search word-based service by an electronic device, the method comprising:
displaying a search window configured to receive text input on at least a portion of a display of the electronic device;
receiving text input through the search window;
identifying whether the text includes at least one string representing a function and/or a command of the electronic device; and
in response to identifying the at least one string, displaying, on at least a portion of the display, a user interface including a selectable object for changing a setting for a function of the electronic device corresponding to the at least one string.

12. The method of claim 11, wherein displaying, on the at least a portion of the display, the user interface including the selectable object for changing the setting for the function of the electronic device corresponding to the at least one string includes, based on the at least one string including a string for identifying the function of the electronic device and a string representing a command for the function, displaying, on at least a portion of the display, a user interface including the selectable object to which the command is applied in relation to the setting for the function of the electronic device.

13. The method of claim 11 or 12, wherein the command includes at least one of a turn-on command, a turn-off command, an attribute setting command, or a change command.

14. The method of any one of claims 11 to 13, wherein displaying, on the at least a portion of the display, the user interface including the selectable object for changing the setting for the function of the electronic device corresponding to the at least one string includes:
changing at least one attribute among a mode, an attribute value, or a level associated with the function of the electronic device based on the at least one string including a string for identifying the function of the electronic device; and
displaying a user interface including the selectable object indicating the changed attribute on at least a portion of the display.

15. A non-volatile storage medium storing at least one computer-readable instruction, the at least one instruction configured to, when executed by at least one processor (120, 320) of an electronic device (101), cause the electronic device (101) to perform at least one operation, the at least one operation comprising:
displaying a search window configured to receive text input on at least a portion of a display of the electronic device;
receiving text input through the search window;
identifying whether the text includes at least one string representing a function and/or a command of the electronic device; and
in response to identifying the at least one string, displaying, on at least a portion of the display, a user interface including a selectable object for changing a setting for a function of the electronic device corresponding to the at least one string.
